# FASCICULE DE BREVET EUROPEEN

(11) **EP 0 459 874 B1**
(45) Date de publication et mention de la délivrance du brevet: **05.10.1994**
(21) Numéro de dépôt: 91401328.9
(22) Date de dépôt: 23.05.1991
(51) Int. Cl.: B60S 1/38

(54) **Bras d'essuie-glace**
Scheibenwischerarm
Windshield wiper arm

(30) Priorité: 23.05.1990 FR 9006468
(43) Date de publication de la demande: 04.12.1991
(73) Titulaire: PAUL JOURNEE S.A., F-92707 Colombes Cédex (FR)
(72) Inventeur: Lescher, Henri, F-78300 Saint-Germain-en-Laye (FR)
(74) Mandataire: Lemaire, Marc

(56) Documents cités:
- EP-A- 0 240 897
- WO-A-90/08677
- BE-A- 480 599
- DE-A- 2 951 688
- DE-A- 3 611 098
- FR-A- 2 354 904

## Description

La présente invention concerne un balai d'essuie-glace de véhicule automobile.

Un balai d'essuie-glace se compose pour l'essentiel d'une lame d'essuyage en caoutchouc qui est reliée à un bras d'entraînement par une structure formant support dont la fonction principale est d'assurer une qualité d'essuyage la meilleure possible en conférant à la lame d'essuyage une conformation spatiale qui soit en permanence adaptée à la courbure de la glace à essuyer et aux conditions d'utilisation.

A cet effet les structures de support connues se composent d'un bras métallique rigide principal fixé à l'extrémité libre du bras d'entraînement et d'un ou plusieurs bras articulés entre eux et/ou sur le bras principal dont certains reçoivent la lame d'essuyage, cette dernière pouvant comporter des inserts de renfort gui lui confèrent des propriétés mécaniques de raideur transversale et/ou de souplesse longitudinale déterminées.

L'ensemble est donc particulièrement complexe et nécessite des opérations d'assemblage, le plus souvent par sertissage, qui sont longues et coûteuses et dont la qualité influe directement sur le comportement et le bon fonctionnement de l'essuie-glace.

A titre d'exemple, un balai d'essuie-glace performant de 60 centimètres de longueur est généralement constitué d'une douzaine de composants.

De plus cette conception de balai d'essuie-glace a pour effet de différencier chaque modèle produit soit par la nature et les dimensions de ces composants, soit par leur nombre et leur procédé d'assemblage.

Il en découle des stocks importants chez les fabricants et des impossibilités de rationaliser la production en grande série.

Afin de réduire les coûts de fabrication qui sont également dûs aux opérations de protection contre la corrosion et de peinture des composants métalliques, il a également été proposé de réaliser ces composants en matière plastique mais l'aspect d'un tel ensemble s'est avéré nuisible à sa commercialisation du fait de sa perception par les clients comme un produit de moins bonne qualité.

De tels balai d'essuie-glace sont décrits et représentés dans les documents DE-A-2 951 688 et DE-A-3 611 098.

Pour rémédier aux problèmes exposés ci-dessus la présente invention propose un balai d'essuie-glace du type comportant une lame d'essuyage destinée à s'adapter à la courbure d'une glace à essuyer et une structure formant support de lame qui est reliée à l'extrémité libre d'un bras d'entraînement, la structure étant constituée par un profilé d'un seul tenant auquel est relié le bras d'entraînement et qui reçoit directement la lame d'essuyage qui comporte une portion creuse de liaison venue de matière avec la lame, qui s'étend sensiblement sur toute la longueur de la lame et dans laquelle est reçu le profilé, caractérisé en ce qu'il comporte des moyens d'accrochage de la portion creuse de liaison sur le profilé, lesdits moyens d'accrochage s'étendant le long dudit balai et comprenant des séries complémentaires de stries en relief et de rainures longitudinales.

Selon plusieurs modes de réalisation de l'invention :
- la portion creuse de liaison présente une section transversale sensiblement en forme de U dont les branches parallèles enserrent des faces correspondantes du profilé ;
- le profilé présente une section transversale sensiblement en forme de U et il est reçu dans la portion creuse de manière à déterminer une chambre interne de section sensiblement rectangulaire ;
- les branches parallèles de la portion creuse de liaison sont sensiblement parallèles au plan général dans lequel s'étend la lame d'essuyage ;
- la lame d'essuyage est raccordée à la portion creuse de liaison par une portion intermédiaire en forme de soufflet dont les plis s'étendent longitudinalement ;
- la chambre interne peut être remplie d'un matériau déformable élastiquement et notamment par de la mousse de polyuréthane expansé ;
- le profilé est en matière plastique et peut comporter une ou plusieurs portions déformables élastiquement pour conférer au bras une élasticité lui permettant de se déformer pour s'adapter à la courbure de la glace à essuyer ;
- ces portions déformables sont des soufflets dont les plis s'étendent dans des plans transversaux ;
- le profilé et la lame d'essuyage sont des tronçons de produits fabriqués en continu ;
- la lame d'essuyage est un tronçon d'un produit en caoutchouc extrudé et le profilé est un tronçon d'un produit en matière plastique extrudée ; et
- le tronçon de profilé subit une étape de formage dans un moule préalablement à son assemblage avec le tronçon de la lame d'essuyage.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe transversale selon la ligne 1-1 de la figure 2 d'un balai d'essuie-glace selon l'invention ;
- la figure 2 est une vue en perspective d'un balai d'essuie-glace selon l'invention ; et
- la figure 3 est une vue en coupe transversale d'une variante de réalisation de la lame d'essuyage.

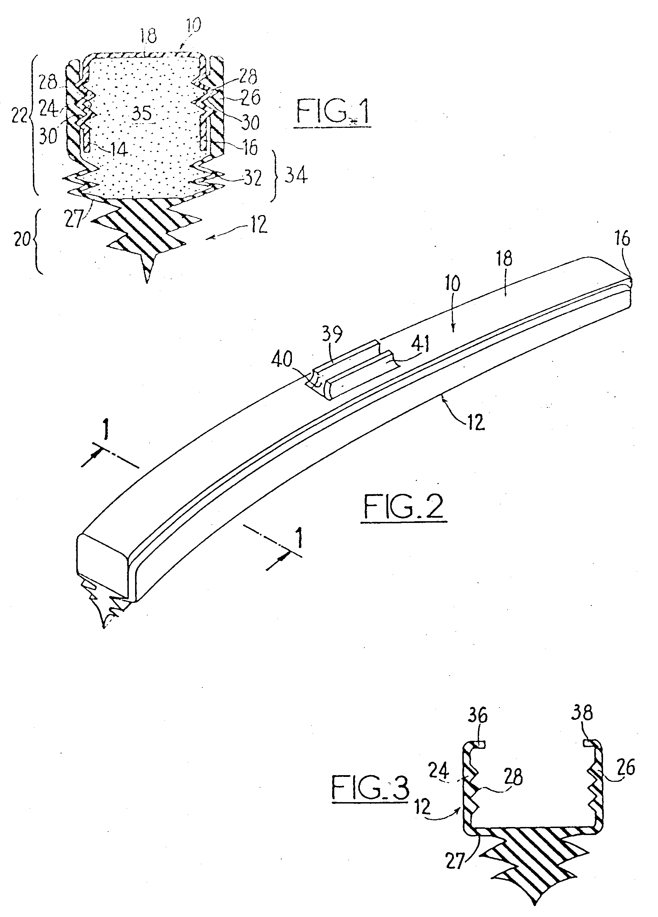

On a représenté aux figures 1 et 2 un balai d'essuie-glace comportant deux pièces emboîtées élastiquement l'une dans l'autre constituées d'un profilé 10 et d'une lame d'essuyage 12.

Le profilé 10 est un tronçon d'un profilé extrudé en matière plastique et la lame 12 est un tronçon d'un produit en caoutchouc extrudé.

En section transversale, le profilé 10 servant de support à la lame 12 présente une forme en U renversé constituée de deux branches parallèles verticales 14 et 16 définissant les faces latérales du profilé et d'une branche horizontale 18 définissant la face supérieure du profilé (figure 2).

La lame d'essuyage 12 comprend deux portions superposées verticalement, une portion inférieure 20 constituant la lame d'essuyage proprement dite et une portion supérieure de liaison 22. Le profil de la portior inférieure 20 est classique et celle-ci se prolonge par la portion supérieure creuse 22 de liaison au profilé 10 qui présente en section transversale la forme d'un U.

Les branches parallèles verticales 24 et 26 du U s'étendent parallèlement au plan général vertical dans lequel s'étend la partie inférieure 20 et elles sont reliées entre elles par une branche horizontale 27.

L'écartement des branches verticales 24 et 26 et le choix des épaisseurs sont tels que les faces latérales 14 et 16 du profilé 10 soient serrées élastiquement dans la portion creuse de liaison 22.

Afin d'améliorer l'accrochage de la portion creuse 22 sur le support 10 et d'éviter son déboîtement en fonctionnement, les faces internes des branches 24 et 26 comportent des stries longitudinales en relief 28 qui sont reçues dans des rainures longitudinales complémentaires 30 formées dans les faces latérales 14 et 16 du profilé 10.

Les parties inférieures des branches 24 et 26 comportent chacune des plis longitudinaux 32 dont l'ensemble définit une portion intermédiaire en forme de soufflet élastique 34.

Le soufflet de raccordement 34 confère à la lame d'essuyage une élasticité selon la direction verticale qui lui permet de s'adapter à la courbure de la glace à essuyer.

Cette élasticité transversale peut être augmentée en remplissant la chambre interne de section rectangulaire que délimitent entre eux le profilé 10 et la portion creuse de liaison 22, d'une mousse élastique 35 et notamment d'une mousse en polyuréthane expansé.

Dans le mode de réalisation représenté à la figure 3, on a supprimé le soufflet 34. Les moyens d'accrochage de la lame 12 sur un profilé 10 comportent des stries en relief 28 et sont complétés par des bords supérieurs horizontaux 36 et 38 qui prolongent les extrémités supérieures des branches 24 et 26 et qui sont prévus pour épouser au moins partiellement la face supérieure 18 d'un profilé 10.

La liaison du profilé 10 à un bras d'entraînement (non représenté) est réalisée de manière classique et le profilé peut comporter à cet effet une fenêtre 40 découpée dans sa face supérieure 18 et deux joues latérales parallèles 39 et 41 permettant de recevoir un axe d'articulation.

Un balai d'essuie-glace selon l'invention est réalisé selon le procédé suivant.

On produit en continu la lame d'essuyage 12 en caoutchouc extrudé et le profilé 10 en matière plastique extrudée.

On tronçonne ces produits longs pour réaliser des tronçons de longueurs appariées que l'on assemble ensuite sans aucune opération de collage ou de fixation en les emboîtant l'un dans l'autre.

Préalablement à l'assemblage on a pu former le profilé 10 pour lui conférer une conformation spatiale déterminée.

Cette étape de formage peut être réalisée à l'aide d'un moule chauffant de forme et de profil adaptés.

Au cours de cette étape de formage on peut également conformer les extrémités du balai.

Il est également possible de réaliser les joues latérales 39, 41 de fixation du bras d'entraînement et la fenêtre 40 à partir du matériau constitutif de la face supérieure 18 du profilé à l'aide d'un poinçon du moule chauffant permettant de conformer cette partie du bras.

Le moule peut être constitué en plusieurs parties dont deux parties d'extrémité et une partie centrale standard utilisables pour tous les modèles et des parties intermédiaires interchangeables de longueurs variables que l'on choisit en fonction de la longueur finale du balai à réaliser.

L'ensemble de ce procédé est entièrement automatisable et ne nécessite pratiquement aucun stockage de composants ou de produits intermédiaires.

Les opérations de peinture sont supprimées.

Les joues latérales de la lame qui entourent le profilé masquent la plus grande partie de celui-ci et rendent pratiquement imperceptible la présence du plastique.

Les joues latérales en caoutchouc du balai sont très esthétiques et il est possible d'y réaliser des marquages et/ou de modifier leur état de surface.

Il est également possible d'utiliser des matières plastiques colorées pour réaliser des balais de teintes assorties à celles de la carrosserie du véhicule.

Selon une autre variante non représentée, la portion creuse 22 peut être entièrement fermée pour constituer un tube dans lequel le profilé 10 est enfilé lors de l'assemblage.

Si nécessaire le profilé peut être métallique.

L'accrochage de la lame sur le profilé peut être complété par un collage total ou partiel qui améliore en outre l'étanchéité interne du balai.

La mousse introduite dans le balai participe également à la liaison des deux composants du balai.

Le profilé peut comporter un volet aérodynamique venu de matière ou des moyens d'accrochage pour un tel volet.

## Revendications

1. Balai d'essuie-glace du type comportant une lame d'essuyage (12) destinée à s'adapter à la courbure d'un glace à essuyer et une structure formant support de lame qui est reliée à l'extrémité libre d'un bras d'entraînement, la structure étant constituée par un profilé (10) d'un seul tenant auquel est relié le bras d'entraînement et qui reçoit directement la lame d'essuyage (12) qui comporte une portion creuse de liaison (22) venue de matière avec la lame, qui s'étend sensiblement sur toute la longueur de la lame et dans laquelle est reçu le profilé (10), caractérisé en ce qu'il comporte des moyens d'accrochage de la portion creuse de liaison (22) sur le profilé (10), lesdits moyens d'accrochage s'étendant le long dudit balai et comprenant des séries complémentaires de stries en relief (28) et de rainures longitudinales (30).

2. Balai d'essuie-glace selon la revendication 1, caractérisé en ce que la portion creuse de liaison (22) présente une section transversale sensiblement en forme de U dont les branches parallèles (24,26) enserrent des faces correspondantes (14,16) du profilé.

3. Balai d'essuie-glace selon la revendication 2, caractérisé en ce que le profilé (10) présente une section transversale sensiblement en forme de U et en ce qu'il est reçu dans la portion creuse (22) de manière à délimiter une chambre interne de section sensiblement rectangulaire.

4. Balai d'essuie-glace selon l'une des revendications 2 ou 3, caractérisé en ce que les branches parallèles (24,26) de la portion creuse de liaison (22) sont sensiblement parallèles au plan général dans lequel s'étend la lame d'essuyage (12).

5. Balai d'essuie-glace selon l'une quelconque des revendications précédentes, caractérisé en ce que les stries (28) sont formées sur les faces internes des branches parallèles (24,26) de la portion creuse de liaison (22), et en ce que les rainures complémentaires (30) sont formées sur les faces correspondantes (14,16) en regard du profilé (10).

6. Balai d'essuie-glace selon l'une quelconque des revendications précédentes, caractérisé en ce que la lame d'essuyage est raccordée à la portion creuse de liaison par une portion intermédiaire en forme de soufflet (34) dont les plis s'étendent longitudinalement.

7. Balai d'essuie-glace selon l'une des revendications 3 ou 4, caractérisé en ce que la chambre interne est remplie d'un matériau déformable élastiquement.

8. Balai d'essuie-glace selon la revendication 7, caractérisé en ce que le matériau de remplissage est de la mousse et notamment de la mousse de polyuréthane expansé.

9. Balai d'essuie-glace selon l'une quelconque des revendications précédentes, caractérisé en ce que le profilé (10) est en matière plastique.

10. Balai d'essuie-glace selon l'une quelconque des revendications précédentes, caractérisé en ce que le profilé (10) comporte une ou plusieurs portions déformables élastiquement pour conférer au bras une élasticité lui permettant de se déformer pour s'adapter à la courbure de la glace à essuyer.

11. Balai d'essuie-glace selon la revendication 10, caractérisé en ce que lesdites portions déformables sont des soufflets dont les plis s'étendent dans des plans transversaux.

12. Balai d'essuie-glace selon l'une quelconque des revendications précédentes, caractérisé en ce que le profilé (10) et la lame d'essuyage (12) sont des tronçons de produits fabriqués en continu.

13. Balai d'essuie-glace selon la revendication 12, caractérisé en ce que la lame d'essuyage (12) est un tronçon d'un produit en caoutchouc extrudé et en ce que le profilé (10) est un tronçon d'un produit en matière plastique extrudée.

14. Balai d'essuie-glace selon la revendication 13, caractérisé en ce que le tronçon de profilé (10) a subi une étape de formage dans un moule préalablement à son assemblage avec le tronçon de lame d'essuyage.

## Claims

1. A windshield wiper blade of the type comprising a wiper (12) to fit against the curve of a windshield to be wiped and a wiper support structure which is connected to the free end of a driving arm, the structure being formed by a bar (10) in a single piece to which the driving arm is connected and which directly receives the wiper (12) which has a hollow connecting portion (22) in one piece with the wiper, which extends substantially over the entire length of the wiper and into which the bar (10) is fitted,
**characterised in that** it comprises means for hooking the hollow connecting portion (22) onto the bar (10), the said hooking means extending along the said blade and comprising complementary series of raised ribs (28) and of longitudinal grooves (30).

2. A windshield wiper blade according to Claim 1,
**characterised in that** the hollow connecting portion (22) has a substantially U-shaped cross section, the par arms (24, 26) of which wedge corresponding faces (14, 16) of the bar.

3. A windshield wiper blade according to Claim 2,
**characterised in that** the bar (10) has a substantially U-shaped cross section,
**and in that** it is fitted into the hollow portion (22) so as to delimit an internal chamber having a substantially rectangular section.

4. A windshield wiper blade according to one of Claims 2 or 3,
**characterised in that** the parallel arms (24, 26) of the hollow connecting portion (22) are substantially parallel to the general plane in which the wiper (12) extends.

5. A windshield wiper blade according to any one of the preceding Claims,
**characterised in that** the ribs (28) are formed on the inner faces of the parallel arms (24, 26) of the hollow connecting portion (22),
**and in that** the complementary grooves (30) are formed on the opposite corresponding faces (14, 16) of the bar (10).

6. A windshield wiper blade according to any one of the preceding Claims,
**characterised in that** the wiper is connected to the hollow connecting portion by an intermediate portion in the form of bellows (34), in which the folds extend longitudinally.

7. A windshield wiper blade according to one of Claims 3 or 4,
**characterised in that** the internal chamber is filled with an elastically deformable material.

8. A windshield wiper blade according to Claim 7,
**characterised in that** the filling material is foam and in particular expanded polyurethane foam.

9. A windshield wiper blade according to any one of the preceding Claims,
**characterised in that** the bar (10) is made from plastic material.

10. A windshield wiper blade according to any one of the preceding Claims,
**characterised in that** the bar (10) comprises one or more elastically deformable portions to endow the arm with an elasticity enabling it to deform to fit against the curve of the windshield to be wiped.

11. A windshield wiper blade according to Claim 10,
**characterised in that** the said deformable portions are bellows, in which the folds extend in transversal planes.

12. A windshield wiper blade according to one of the preceding Claims,
**characterised in that** the bar (10) and the wiper (12) are sections of continuously manufactured products.

13. A windshield wiper blade according to Claim 12,
**characterised in that** the wiper (12) is a section of a product made from extruded rubber,
**and in that** the bar (10) is a section of a product made from extruded plastic material.

14. A windshield wiper blade according to Claim 13,
**characterised in that** the bar section (10) has undergone a forming stage in a mould prior to its assembly with the wiper section.

## Patentansprüche

1. Scheibenwischerleiste, bestehend aus einem Wischblatt (12), das sich an die Krümmung einer zu wischenden Scheibe anpaßt, und aus einer als Halterung für das Wischblatt dienenden Struktur, die mit dem freien Ende eines Antriebsarms verbunden ist, wobei die Struktur aus einem einteiligen Profil (10) besteht, mit dem der Antriebsarm verbunden ist und das direkt das Wischblatt (12) aufnimmt, das einen einstückig mit dem Wischblatt ausgeführten hohlen Verbindungsabschnitt (22) umfaßt, der sich in etwa über die gesamte Länge des Wischblatts erstreckt und in den das Profil (10) eingesetzt ist , **dadurch gekennzeichnet,** daß sie Eingreifmittel für das Eingreifen des hohlen Verbindungsabschnitts (22) an dem Profil (10) umfaßt, wobei sich die besagten Eingreifmittel entlang der Wischerleiste erstrecken und zueinander passende Reihen von vorstehenden Riefen (28) und Längsrillen (30) enthalten.

2. Scheibenwischerleiste nach Anspruch 1 , **dadurch gekennzeichnet,** daß der hohle Verbindungsabschnitt (22) einen in etwa U-förmigen Querschnitt aufweist, dessen parallele Schenkel (24, 26) entsprechende Seiten (14, 16) des Profils umschließen.

3. Scheibenwischerleiste nach Anspruch 2 , **dadurch gekennzeichnet,** daß das Profil (10) einen in etwa U-förmigem Querschnitt aufweist und daß es in dem hohlen Abschnitt (22) aufgenommen ist, so daß eine Innenkammer mit einem in etwa rechteckigen Querschnitt gebildet wird.

4. Scheibenwischarleiste nach einem der Ansprüche 2 oder 3 , **dadurch gekennzeichnet,** daß die parallelen Schenkel (24, 26) des hohlen Verbindungsabschnitts (22) in etwa parallel zu der Gesamtebene verlaufen, in der sich das Wischblatt (12) erstreckt.

5. Scheibenwischerleiste nach einem der vorangehenden Ansprüche, **dadurch gekennzeichnet,** daß die Riefen (28) an den Innenseiten der parallelen Schenkel (24, 26) des hohlen Verbindungsabschnitts (22) ausgebildet sind und daß die dazu passenden Rillen (30) an den entsprechenden gegenüberliegenden Seiten (14, 16) des Profils (10) ausgebildet sind.

6. Scheibenwischerleiste nach einem der vorangehenden Ansprüche, **dadurch gekennzeichnet,** daß das Wischblatt an den hohlen Verbindungsabschnitt über einen Zwizchenabschnitt in Form eines Balgs (34) angeschlossen ist, dessen Falten sich in Längsrichtung erstrecken.

7. Scheibenwischerleiste nach einem der Ansprüche 3 oder 4 , **dadurch gekennzeichnet,** daß die Innenkammer mit einem elastisch verformbaren Material gefüllt ist.

8. Scheibenwischerleiste nach Anspruch 7 , **dadurch gekennzeichnet,** daß es sich bei dem Füllmaterial um Schaumstoff, insbesondere um Polyurethanschaum, handelt.

9. Scheibenwischerleiste nach einem der vorangehenden Ansprüche, **dadurch gekennzeichnet,** daß das Profil (10) aus Kunststoff besteht.

10. Scheibenwischerleiste nach einem der vorangehenden Ansprüche, **dadurch gekennzeichnet,** daß das Profil (10) einen oder mehrere elastisch verformbare Abschnitte umfaßt, um dem Arm eine Elastizität zu verleihen, die es ihm ermöglicht, sich zu verformen, um sich an an die Krümmung der zu wischenden Sheibe anzupassen.

11. Scheibenwischerleiste nach Anspruch 10 , **dadurch gekennzeichnet,** daß es sich bei den verformbaren Abschnitten um Bälge handelt, deren Falten sich in Querebenen erstrecken.

12. Sicheibenwischerleiste nach einem der vorangehenden Ansprüche, **dadurch gekennzeichnet,** daß das Profil (10) und das Wischblatt (12) Teilstücke von Produkten sind, die im Durchlaufbetrieb hergestellt werden.

13. Scheibenwischerleiste nach Anspruch 12 , **dadurch gekennzeichnet,** daß das Wischblatt (12) ein Teilstück eines Produkts aus extrudiertem Gummi ist, während es sich bei dem Profil (10) um ein Teilstück eines Produkts aus extrudiertem Kunststoff handelt.

14. Scheibenwischerleiste nach Anspruch 13 , **dadurch gekennzeichnet,** daß an dem Profilteilstück (10) ein Formvorgang in einem Formwerkzeug vor seinem Zusammenbau mit dem Wischblattteilstück erfolgt.
